(19) Europäisches Patentamt
European Patent Office
Office européen des brevets

(11) Veröffentlichungsnummer: **0 436 802 A2**

# (12) EUROPÄISCHE PATENTANMELDUNG

(21) Anmeldenummer: **90121758.8**

(22) Anmeldetag: **14.11.90**

(51) Int. Cl.5: **C08G 65/48**, C08G 65/44, C08L 71/12

(30) Priorität: **11.01.90 DE 4000644**

(43) Veröffentlichungstag der Anmeldung: **17.07.91 Patentblatt 91/29**

(84) Benannte Vertragsstaaten: **DE FR GB IT NL**

(71) Anmelder: **HÜLS AKTIENGESELLSCHAFT**
**Patentabteilung / PB 15 - Postfach 13 20**
**W-4370 Marl 1(DE)**

(72) Erfinder: **Kowalczik, Udo, Dr.**
**Am Nordbad 106**
**W-4630 Bochum 1(DE)**
Erfinder: **Bartmann, Martin, Dr.**
**Elper Weg 64**
**W-4350 Recklinghausen(DE)**

## (54) Verkappte Polyphenylenether.

(57)

2.1 Aufgabe war die Erhöhung der oxidativen und thermischen Stabilität von Polyphenylenethern durch Verkappen mit leicht handhabbaren Substanzen, die weder aggressiv noch korrosiv sind.

2.2 Die Aufgabe wurde gelöst durch Umsetzen von 100 Gewichtsteilen Polyphenylenether mit 0,5 bis 10 Gewichtsteilen bestimmter gesättigter Imide, die am Stickstoff voll substituiert sind, bei Temperaturen von 230 bis 330 °C.

2.3 Die Formmassen auf Basis dieser verkappten Polyphenylenether werden zur Herstellung von Formteilen verwendet.

EP 0 436 802 A2

# VERKAPPTE POLYPHENYLENETHER

Gegenstand der vorliegenden Erfindung sind auf neuartige Weise verkappte und zugleich stabilisierte Polyphenylenether bzw. diese enthaltende Gemische, ein Verfahren zu ihrer Herstellung sowie Formmassen, die derartige verkappte Polyphenylenether enthalten.

Polyphenylenether (PPE) sind eine bekannte Klasse von Polymeren, welche sich durch sehr gute physikalische und chemische Eigenschaften auszeichnet, insbesondere durch eine hohe Wärmeformbeständigkeit und eine sehr gute Beständigkeit gegenüber heißem Wasser, Säuren und Laugen.

Ein Nachteil dieser Polyphenylenether ist die mangelnde Beständigkeit nicht nur bei thermischer Belastung, sondern auch bei längerer Einwirkung von oxidierenden Einflüssen während der Verarbeitung oder des Gebrauchs. Eine derartige thermische oder oxidative Schädigung verschlechtert nicht nur die Farbe des Produkts, sondern auch die mechanischen Eigenschaften sowie die Verarbeitbarkeit. Durch Verkappung der im Polyphenylenether enthaltenen Hydroxylgruppen kann deren Oxidation verhindert werden, womit man eine wesentliche Verbesserung der oxidativen und thermischen Stabilität erreicht.

Bisher wurden verschiedene Verfahren zur Verkappung von Polyphenylenethern beschrieben, beispielsweise in den DE-PSS 25 05 329, 28 22 857, 28 22 859 und 28 22 434. Die dort beschriebenen Verfahren werden alle in Lösung mit einem großen Überschuß an Verkappungsmittel durchgeführt. Als Substrate dienen hauptsächlich Acylierungsreagenzien wie z. B. Acetylchlorid oder Acetanhydrid, d. h. aggressive und korrosive Verbindungen. Die entstehende Säure muß im allgemeinen durch eine zugesetzte Base gebunden werden, was den Verfahrensablauf und die Aufarbeitung kompliziert macht.

Eine beträchtlich höhere Raumzeitausbeute erzielt man beim Verkappen in der Schmelze. Ein derartiges Verfahren wird in der US-PS 3 375 228 beschrieben; als Verkappungsmittel werden Säurechloride, Säureanhydride oder Ketene eingesetzt. Wegen der hier verstärkt auftretenden Korrosionsprobleme sowie wegen des Einsatzes von toxikologisch bedenklichen Reagentien hat dieses Verfahren keine technische Bedeutung erlangt.

Eine weitere Verkappungsmethode in der Schmelze wird in der EP-OS 0 283 775 beschrieben. Dort werden die Polyphenylenether mit Salicylsäure-oder Anthranilsäurederivaten in der Schmelze behandelt. Besonders effizient sollen hierbei die linearen Polysalicylate und Salicylcarbonat sein. Eine nahezu vollständige Verkappung wird allerdings erst bei hohen Mengen des Verkappungsmittels (10 Gew.-% bezogen auf PPE) erreicht, was mit einer starken, aber nicht gewünschten Erniedrigung des Glaspunktes einhergeht (siehe dort die Beispiele in Tabelle II). Zudem wird bei der Umsetzung mit Salicylsäurederivaten nie ein hydroxylgruppenfreies Produkt erhalten, da durch Reaktionen des Verkappungsmittels OH-Gruppen gebildet werden. Für einige Anwendungen ist die Abwesenheit von OH-Gruppen jedoch erstrebenswert.

Schließlich wird in der EP-OS 0 232 716 ein Verfahren zur Stabilisierung von Polyphenylenethern beschrieben, bei dem die Umsetzung mit einem großen Überschuß einer NH-gruppenhaltigen Verbindung erfolgt. Als Beispiele werden Amidine, Amide, zyklische Imide, Sulfonamide und Aminosäuren genannt, wobei $\epsilon$-Caprolactam bevorzugt ist. Wie aus den Beispielen hervorgeht, werden dabei beträchtliche Mengen dieser Verbindungen eingesetzt, was anschließend einen umständlichen Reinigungsprozeß erfordert. Zudem ist der so hergestellte "stabilisierte" Polyphenylenether nur bis 290 °C beständig; unter Compoundierungs- und Verarbeitungsbedingungen wird diese Temperatur jedoch häufig überschritten.

Ziel der vorliegenden Erfindung war daher, ein einfach durchzuführendes Verfahren zu entwickeln, das die Verkappung von Polyphenylenethern mit Substanzen gestattet, die nicht aggressiv oder korrosiv sind, wobei der entstehende verkappte Polyphenylenether eine gesteigerte oxidative und thermische Stabilität aufweist. Insbesonderesollte die beträchtliche Erhöhung des Molekulargewichts beim erstmaligen Aufschmelzen des frisch hergestellten Polyphenylenethers zurückgedrängt werden.

Dieses Ziel wird durch ein Verfahren erreicht, bei dem der Polyphenylenether mit bestimmten Imiden bei Temperaturen von 230 bis 330 °C behandelt wird. Gegenstand der Erfindung sind auch die so hergestellten erfindungsgemäßen stabilisierten Polyphenylenether sowie Formmassen auf deren Basis.

Ausgangsprodukt für das erfindungsgemäße Verfahren sind Polymere, die aus folgenden Einheiten aufgebaut sind:

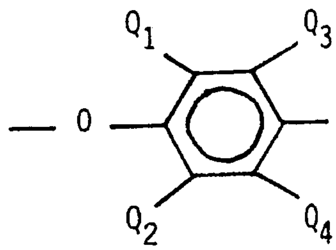

Hierbei sind $Q_1$ und $Q_2$ entweder Alkylreste mit 1 bis 10 C-Atomen, die vorzugsweise primär sind, Cycloalkylreste mit 5 bis 10 C-Atomen, Benzylreste mit 7 bis 10 C-Atomen oder Arylreste mit 6 bis 10 C-Atomen. $Q_3$ und $Q_4$ können die gleiche Bedeutung wie $Q_1$ und $Q_2$ haben; vorzugsweise bedeuten sie jedoch Wasserstoff.

Diese Polyphenylenether können nach jedem dem Stand der Technik entsprechenden Verfahren hergestellt werden. Üblicherweise werden die Phenole mit einem Sauerstoff enthaltenden Gas wie z. B. Luft in Gegenwart eines Katalysatorkomplexes oxidativ gekuppelt. Bei Einsatz eines in para-Stellung halogenierten Phenols muß eine ausreichende Menge an Säureacceptor anwesend sein. Vorzugsweise werden als Katalysatoren Kupfer-Amin-Komplexe oder manganhaltige Systeme benutzt (DE-OSS 32 24 691 und 32 24 692 sowie US-PSS 3 306 874, 3 306 875 und 4 028 341). Die Viskositätszahlen J, bestimmt nach DIN 53 728 in Chloroform bei 25 °C, liegen im Bereich von 20 bis 80 $cm^3/g$ (Konzentration 5 g/l), vorzugsweise im Bereich von 40 bis 70 $cm^3/g$. Herstellungsbedingt enthalten die Polyphenylenether mindestens eine phenolische Endgruppe.

Zur Herstellung dieser Polyphenylenether können beispielsweise folgende Monomere eingesetzt werden: 4-Brom-2,6-dimethylphenol, 2-Methyl-6-ethylphenol, 2,6-Diethylphenol, 2-Methyl-6-tert.-butylphenol, 4-Brom-2,6-diphenylphenol, 2-Benzyl-6-methylphenol, 2,6- Dibenzylphenol, 2,3,6-Trimethylphenol oder bevorzugt 2,6-Dimethylphenol. Selbstverständlich können auch Gemische derartiger Phenole verwendet werden.

Die Verkappung der phenolischen Gruppen des Polyphenylenethers wird mit gesättigten, aliphatischen, aromatischen oder gemischt aliphatisch-aromatischen Imiden durchgeführt, die am Stickstoff voll substituiert sind, d. h. keine NH-Gruppe besitzen. Eingesetzt werden hierbei Substanzen mit den allgemeinen Formeln

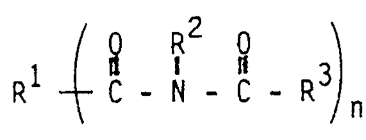 und/oder 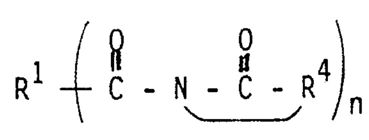 ,

wobei

| | |
|---|---|
| $R^1$ | = aromatischer oder gesättigter aliphatischer Rest mit 1 bis 20 C-Atomen; |
| $R^2$ und $R^3$ | = aromatischer oder bevorzugt gesättigter aliphatischer Rest mit 1 bis 12 C-Atomen; |
| $R^4$ | = $(CH_2)_m$ mit m = 3 bis 11; |
| n | = 1 bis 3; bevorzugt 1 oder 2. |

Als Beispiele für geeignete derartige Substanzen seien z. B. N-Benzoyl-N-methylacetamid, N-Acetyl-ε-caprolactam, N-Benzoyl-ε-caprolactam, N-Benzoyllaurinlactam, N,N'-Iso- oder Terephthaloylbis-ε-caprolactam und N,N'-Iso- oder Terephthaloylbislaurinlactam genannt.

Bevorzugt werden N-Benzoyllaurinlactam, N-Benzoyl-ε-caprolactam, N,N'-Terephthaloylbislaurinlactam und N,N'-Terephthaloylbis-ε-caprolactam eingesetzt.

Diese Imide können nach verschiedenen, dem Stande der Technik entsprechenden Verfahren hergestellt werden (siehe M.K. Akkapeddi et al. in "Recent Advances in Anionic Polymerization", T.E. Hoegen Esch and J. Smid (Ed.), Elsevier 1987, pp. 318 - 328).

Aus der EP-OS 0 223 115 ist, allerdings mit vollkommen anderer Zielsetzung, die Umsetzung von Polyphenylenethern mit (Meth)Acryloyllactamen wie z. B. N-Methacryloyl-ε-caprolactam bereits bekannt. Es geht aus dieser Schrift jedoch nicht hervor, daß die so behandelten Polyphenylenether in irgendeiner Weise stabilisiert wären. Im Gegenteil werden dort, vor allem in Abwesenheit von Styrolpolymerisaten, stärker bis vollständig vernetzte Produkte erhalten. Der Fachmann findet dort keinen Hinweis darauf, daß mit den erfindungsgemäßen Imiden eine derartige Vernetzung selbst bei polystyrolfreiem Polyphenylenether nicht nur unterbleibt, sondern im Gegenteil sogar dem Molekulargewichtsaufbau bei höheren Temperaturen wirkungsvoll begegnet werden kann.

Gerade auch die Verhinderung des Molekulargewichtsaufbaus beim erstmaligen Aufschmelzen des frisch hergestellten Polyphenylenethers ist ein wesentlicher Aspekt der vorliegenden Erfindung. Normalerweise geht dieser Molekulargewichtsaufbau mit der Bildung von Verzweigungsstellen einher; dies ist jedoch im Hinblick auf die mechanischen Eigenschaften daraus hergestellter Formkörper unerwünscht. Bei den erfindungsgemäßen verkappten Polyphenylenethern haben nicht nur die OH-Endgruppen, wie bei bekannten Verkappungsreaktionen, sondern auch die reaktiven Fehlstellen des Polymeren, die herstellungsbedingt bei frisch hergestelltem Polyphenylenether vorliegen, mit dem Verkappungsmittel reagiert. Die erfindungsgemäßen Produkte weisen wesentlich weniger Verzweigungsstellen auf, was durch die gesteigerte Kristallisierbarkeit aus verdünnter toluolischer Lösung nachgewiesen werden kann.

Die Menge des benutzten Verkappungsmittels ist natürlich abhängig von der Anzahl der vorhandenen Hydroxylgruppen und der Konzentration an Fehlstellen, bewegt sich jedoch zwischen 0,5 und 10 Gew.-%, bezogen auf den eingesetzten Polyphenylenether, bevorzugt zwischen 2 und 6 Gew.-%.

Die erfindungsgemäße Verkappung kann nicht nur bei reinen Polyphenylenethern, sondern auch bei polyphenylenetherhaltigen Gemischen durchgeführt werden. Übliche Bestandteile sind z. B. Polystyrol, schlagzähes Polystyrol, Styrol-Butadien-Copolymere (sowohl als statistische, verschmierte als auch als Blockcopolymere), die gegebenenfalls hydriert sein können, Polyoctenamer und/oder Polyolefine. Eine Behinderung der Verkappung durch derartige Komponenten wird nicht beobachtet, der Polyphenylenetheranteil sollte jedoch zweckmäßigerweise mindestens 20 Gew.-% betragen.

Das Verfahren wird bei 230 bis 330 °C, vorzugsweise in der Schmelze in einem gut knetenden Aggregat, durchgeführt. Man kann jedoch auch in Anwesenheit eines inerten Lösemittels wie z. B. Diphenylether oder Toluol, ggf. unter Druck, arbeiten.

Das erfindungsgemäße Verfahren stellt eine Methode dar, bei der gegenüber den bekannten Verfahren eine geringere Menge an Verkappungsmittel benötigt wird. Wenn hiervon ein stöchiometrischer Überschuß verwendet wird, so braucht dieser anschließend nicht abgetrennt zu werden, da keine nennenswerte Absenkung des Glaspunkts Tg erfolgt. Zudem sind die hier verwendeten Verkappungsmittel gut handhabbar und toxikologisch unbedenklich. Korrosionsprobleme treten nicht auf.

Die erfindungsgemäßen verkappten Polyphenylenether werden als Komponenten für Formmassen verwendet. Als weitere Komponenten können alle diejenigen verwendet werden, die gemäß dem Stande der Technik für übliche polyphenylenetherhaltige Formmassen eingesetzt werden. Auch diese erfindungsgemäßen Formmassen weisen eine verbesserte thermische und oxidative Stabilität sowie wegen der Stabilisierung des Molekulargewichts eine verbesserte Verarbeitbarkeit auf. Sie können zur Herstellung der gleichen Formteile verwendet werden wie bekannte Formmassen auf Basis von Polyphenylenethern.

In den folgenden Beispielen wird die Erfindung verdeutlicht.

<u>Beispiel 1</u>
<u>Herstellung</u> eines Polyphenylenethers

30 kg 2,6-Dimethylphenol in 30 kg Toluol werden unter Luftbegasung innerhalb von 30 Minuten in eine gerührte Mischung aus 260 kg Toluol, 42,0 kg Methanol, 6,0 kg Morpholin, 153 g $CuCl_2 \cdot 2H_2O$ (gelöst in 850 g Methanol) sowie 153 g Di-tert.-butylethylendiamin gegeben. Nach einer Reaktionszeit von 130 Minuten wird die Reaktion durch Zugabe einer Mischung aus 75 kg Wasser, 9 kg Methanol sowie 300 g Triethanolamin und Durchleiten von $CO_2$ gestoppt. Die Wäsche der organischen Phase erfolgt zweimal mit jeweils 125 kg Wasser und 300 g Triethanolamin bei 80 °C. Das Produkt wird mit 350 kg Methanol gefällt, zweimal mit jeweils 180 kg Methanol gewaschen und anschließend getrocknet.

Ausbeute: 25,8 kg; J = 51 $cm^3$/g

<u>Beispiele 2 bis 6 sowie A und B</u>

Auf einem Berstorff-Doppelschneckenextruder ZE 25 * 33 D werden die in der Tabelle angegebenen Gewichtsanteile an Polyphenylenether aus Beispiel 1 und Verkappungsreagenz bei einer eingestellten Temperatur von 290 °C geschmolzen, gemischt und granuliert. Die Extrusion erfolgt unter Entgasungsbedingungen in der letzten Zone des Extruders; die Massetemperatur überschreitet in jedem Fall 300 °C.

Die Beispiele A und B sind nicht erfindungsgemäß; sie dienen nur zu Vergleichszwecken.

Der Verkappungsgrad wird mit Hilfe der FT-IR-Spektroskopie bestimmt. Vergleichswerte werden vom unbehandelten PPE und einem mit Acetanhydrid vollständig verkappten Produkt bestimmt.

Die Bestimmung des Glaspunktes Tg erfolgt an einem Mettler TA 3000 bei einer Aufheizrate von 10 K/min.

Tabelle

| Bsp. | Gew.-% PPE | Verkappungsmittel | Gew.-% Verkappungsmittel | Verkappungsgrad [%] | Tg | J-Wert [$cm^3/g$] |
|---|---|---|---|---|---|---|
| 2 | 97,5 | BLL[a] | 2,5 | 95 | 208 | 56 |
| 3 | 95 | BLL[a] | 5 | > 98 | 206 | 54 |
| 4 | 97,5 | BCL[b] | 2,5 | 97 | 213 | 54 |
| 5 | 95 | BCL[b] | 5 | > 98 | 213 | 53 |
| 6 | 95 | TBLL[c] | 5 | > 98 | 212 | 58 |
| A | 95 | MCL[d] | 5 | > 98 | 206 | (91)[e] |
| B | 100 | - | - | 0 | 213 | 63 |

a) N-Benzoyllaurinlactam
b) N-Benzoyl-ε-caprolactam
c) N,N'-Terephthaloylbislaurinlactam
d) N-Methacryloyl-ε-caprolactam
e) teilweise Vergelung

**Patentansprüche**

1. Verkappte Polyphenylenether bzw. diese enthaltende Gemische, hergestellt aus Polyphenylenethern, die aus folgenden Einheiten aufgebaut sind:

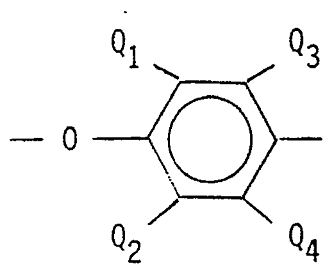

oder Gemischen, die derartige Polyphenylenether enthalten, wobei $Q_1$ und $Q_2$ entweder Alkylreste mit 1 bis 10 C-Atomen, die vorzugsweise primär sind, Cycloalkylreste mit 5 bis 10 C-Atomen, Benzylreste mit 7 bis 10 C-Atomen oder Arylreste mit 6 bis 10 C-Atomen bedeuten; $Q_3$ und $Q_4$ können die gleichen Reste wie $Q_1$ und $Q_2$ oder vorzugsweise Wasserstoff bedeuten,

und 0,5 bis 10 Gew.-%, bezogen auf den Polyphenylenether, an Imiden der allgemeinen Formeln

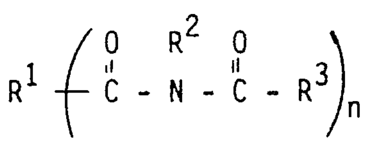

und/oder

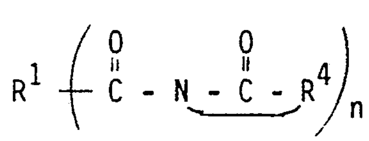

mit

| | |
|---|---|
| $R^1$ | = aromatischer oder gesättigter aliphatischer Rest mit 1 bis 20 C-Atomen; |
| $R^2$ und $R^3$ | = aromatischer oder bevorzugt gesättigter aliphatischer Rest mit 1 bis 12 C-Atomen; |
| $R^4$ | = $(CH_2)_m$ mit m = 3 bis 11; |
| n | = 1 bis 3; bevorzugt 1 oder 2; |

wobei die Komponenten im Temperaturbereich zwischen 230 und 330 °C miteinander umgesetzt werden.

2. Verkappte Polyphenylenether bzw. diese enthaltende Gemische gemäß Anspruch 1, dadurch gekennzeichnet, daß ein Polyphenylenether auf Basis von 2,6-Dimethylphenol verwendet wird.

3. Verkappte Polyphenylenether bzw. diese enthaltende Gemische gemäß den Ansprüchen 1 oder 2, dadurch gekennzeichnet, daß der Polyphenylenether eine Viskositätszahl J von 20 bis 80 $cm^3/g$, bevorzugt 40 bis 70 $cm^3/g$, aufweist.

4. Verkappte Polyphenylenether bzw. diese enthaltende Gemische gemäß den Ansprüchen 1 bis 3, dadurch gekennzeichnet, daß die Menge an Verkappungsmittel 2 bis 6 Gew.-%, bezogen auf den eingesetzten Polyphenylenether, ausmacht.

5. Verkappte Polyphenylenether bzw. diese enthaltende Gemische gemäß den Ansprüchen 1 bis 4, dadurch gekennzeichnet, daß neben dem Polyphenylenether als weitere Bestandteile Polystyrol, schlagzähes Polystyrol, Styrol-Butadien-Copolymere, die gegebenenfalls hydriert sein können, Polyoctenamer und/oder Polyolefine vorhanden sind.

6. Verkappte Polyphenylenether bzw. diese enthaltende Gemische gemäß den Ansprüchen 1 bis 5, dadurch gekennzeichnet, daß die Umsetzung in der Schmelze durchgeführt wird.

7. Verkappte Polyphenylenether bzw. diese enthaltende Gemische gemäß den Ansprüchen 1 bis 6, dadurch gekennzeichnet,

daß als Imid N-Benzoyllaurinlactam oder N-Benzoyl-ε-caprolactam eingesetzt wird.

8. Verkappte Polyphenylenether bzw. diese enthaltende Gemische gemäß den Ansprüchen 1 bis 6, dadurch gekennzeichnet, daß als Imid N,N'-Terephthaloylbislaurinlactam oder N,N'-Terephthaloylbis-ε-caprolactam eingesetzt wird.

9. Verfahren zur Herstellung verkappter Polyphenylenether bzw. diese enthaltende Gemische entsprechend den Ansprüchen 1 bis 8, dadurch gekennzeichnet, daß die Komponenten im Temperaturbereich zwischen 230 und 330 °C miteinander umgesetzt werden.

10. Verfahren gemäß Anspruch 9, dadurch gekennzeichnet, daß die Umsetzung in der Schmelze durchgeführt wird.

11. Formmassen, die verkappte Polyphenylenether gemäß den Ansprüchen 1 bis 8 bzw. durch ein Verfahren gemäß den Ansprüchen 9 oder 10 hergestellte verkappte Polyphenylenether enthalten.